**Europäisches Patentamt**

**European Patent Office**

**Office européen des brevets**

(19)

(11) Veröffentlichungsnummer: **0 171 462**
**B1**

(12) **EUROPÄISCHE PATENTSCHRIFT**

(45) Veröffentlichungstag der Patentschrift:
04.01.89

(51) Int. Cl.⁴: **A 47 K 5/122**

(21) Anmeldenummer: **84114029.6**

(22) Anmeldetag: **20.11.84**

(54) Fliessgutspender.

(30) Priorität: **14.06.84 DE 3429835**

(43) Veröffentlichungstag der Anmeldung:
**19.02.86 Patentblatt 86/8**

(45) Bekanntmachung des Hinweises auf die Patenterteilung:
**04.01.89 Patentblatt 89/1**

(84) Benannte Vertragsstaaten:
**AT BE CH DE FR GB IT LI NL**

(56) Entgegenhaltungen:
**CH-A-643 449**
**US-A-2 804 240**
**US-A-2 824 672**

(73) Patentinhaber: **Ing. Erich Pfeiffer GmbH & Co. KG,
Josef- Bosch- Strasse 4, D-7760 Radolfzell (DE)**

(72) Erfinder: **Skorka, Thomas, Josef- Bosch- Strasse 5,
D-7760 Radolfzell (DE)**

(74) Vertreter: **Patentanwälte Ruff und Beier,
Neckarstrasse 50, D-7000 Stuttgart 1 (DE)**

EP 0 171 462 B1

## Beschreibung

Die Erfindung betrifft einen Fließgutspender mit Handbetätigung, insbesondere für flüssiges Fließgut, mit einer an der Einlaßseite und an der zu einer Austragöffnung führenden Auslaßseite je ein durch Differentialdruck selbstbetätigtes Rückschlagventil aufweisenden Balgpumpe, die als Pumpenteile einen an einem Behälter für das Fließgut anzuordnenden, einen Pumpenbalg im Bereich eines Endes halternden Basisteil und den Pumpenbalg aufweist, der mit einem von Hand gegenüber dem Basisteil verschiebbaren, auf das andere Ende des Balges wirkenden Pumpstößel zusammendrückbar ist, wobei jedes Rückschlagventil zwei gegeneinander bewegbare, mit in Schließlage dicht aneinanderliegenden Ventilschließflächen versehene Ventilteile aufweist, von denen zwei einstückig mit einem Pumpenteil ausgebildet sind.

Es ist eine Sprühflasche für Wasser oder dergl. dieser Art bekannt (DE-C-2 649 007), bei welcher beide Rückschlagventile im wesentlichen koaxial zueinander liegend im Bereich eines Endes des Pumpenbalges vorgesehen sind. Eine Endmanschette des Pumpenbalges bildet dabei den einen Ventilteil des auslaßseitigen Rückschlagventiles während ein Ventilteil des einlaßseitigen Rückschlagventiles in Form eines Kugelsitzes durch den Basisteil gebildet ist. Beim Komprimieren des Balges wird Fließgut ausgedrückt während beim Strecken des Pumpenbalges Fließgut in diesen nachgesaugt wird. Das Fließgut kehrt im Pumpenbalg seine Fließrichtung durch diese Ausbildung um. Dieser bekannte Fließgutspender ist einerseits kompliziert im Aufbau, da er eine Vielzahl unterschiedlicher Einzelteile aufweist und außerdem aufgrund seiner Konstruktion für zähfließende Fließgüter kaum geeignet.

Der Erfindung liegt die Aufgabe zugrunde, einen Fließgutspender der genannten Art zu schaffen, welcher äußerst einfach im Aufbau und daher auch für zähfließende, klebrige Fließgüter, wie Schmierseife, geeignet ist.

Diese Aufgabe wird bei einem Fließgutspender der eingangs genannten Art gemäß der Erfindung dadurch gelöst, daß die beiden Ventile im Bereich der voneinander abgekehrten Enden des Balges liegen und beide Ventilteile wenigstens eines Ventiles einstückig mit dem zugehörigen Pumpenteil ausgebildet sind. Dadurch fließt das Fließgut in Längsrichtung durch den Pumpenbalg vom einen Ende zum anderen Ende hindurch und durch die einstückige Ausbildung der beiden Ventilteile des jeweiligen Ventiles können hinsichtlich der Gefahr von Funktionsstörungen durch problematisches Fließgut sehr günstige Durchflußverhältnisse geschaffen werden.

Nach einem weiteren Merkmal der Erfindung sind beide Ventilteile des auslaßseitigen Ventiles einstückig mit dem auslaßseitigen Ende des Pumpenbalges und/oder beide Ventilteile des einlaßseitigen Ventiles einstückig mit dem Basisteil ausgebildet. Es ist auch denkbar, die Anordnung demgegenüber umgekehrt vorzusehen oder das auslaßseitige Ventil einstückig mit dem Pumpstößel auszubilden. Des weiteren ist es denkbar, beide Ventile einstückig mit ein und demselben Pumpenteil, insbesondere mit dem Pumpenbalg auszubilden.

Bei einer besonders einfachen Ausführungsform sind die Ventilteile mindestens eines Rückschlagventiles durch eine elastisch verformbare Trennwand gebildet, die durch einen Schlitz in die Ventilteile unterteilt ist, wobei die einander zugekehrten Schlitzflächen die Ventilschließflächen bilden. Derartige Ventile, die auch Lippenventile genannt werden, sind wegen ihres einfachen Aufbaues sehr funktionssicher und insbesondere für zähflüssige klebrige Fließgüter geeignet, da sie so ausgebildet werden können, daß sie trotz kleiner Dimensionierung in geöffnetem Zustand einen verhältnismäßig großen Durchlaßquerschnitt bei glatten Oberflächen aufweisen.

Bei einer sehr einfachen Ausführungsform ist die Trennwand im Querschnitt zur Auslaßseite kappenartig, vorzugsweise kugelkalottenförmig, erhöht, wobei sie insbesondere an der erhöhten Seite zur Druckbeaufschlagung frei liegt, so daß das Ventil schnell schließt.

Der Schlitz kann in vorteilhafter Weise in einer Symmetrieebene der Trennwand, wie einer Axialebene der Pumpe, liegen und/oder reicht nur über einen Teil der Höhe der kappenartigen Trennwand, so daß die Ventilteile zum geschlossenen Zustand hin einer verhältnismäßig hohen elastischen Rückstellkraft ausgesetzt sind.

Beide Rückschlagventile können zur weiteren Vereinfachung das Aufbaues des Spenders im wesentlichen gleich ausgebildet sein, wobei vorzugsweise das auslaßseitige Rückschlagventil größer als das andere ist, so daß das Fließgut beim Niederdrücken des Pumpstößels schneller ausgestoßen werden kann, als es bei der Rückstellbewegung des Pumpstößels in den Pumpenbalg nachgesaugt wird.

In weiterer Ausgestaltung der Erfindung bildet der Basisteil der Pumpe ein den Balg umgebendes Zylindergehäuse, dessen innere Stirnwand zu dem einlaßseitigen Rückschlagventil geformt ist, welches insbesondere von einer hinterschnittenen Ringnut für den dichten Eingriff eines Schnappbefestigungsringes am zugehörigen Ende des Balges umgeben ist. Dadurch wird einerseits eine Abstützung und Abschirmung des Umfanges des Balges erreicht und andererseits ermöglicht, daß der Balg am Basisteil lediglich durch eine Schnappverbindung sicher und dicht befestigt werden kann.

Zur formschlüssigen Verbindung des auslaßseitigen Endes des Pumpenbalges mit dem Pumpstößel in dessen beiden Bewegungsrichtungen ist am inneren Ende des Pumpstößels das äußere Ende des Balges befestigt, das zu dem auslaßseitigen Rückschlagventil geformt ist und vorzugsweise mit einem am Außenumfang vorgesehenen Ringwulst abgedichtet in eine Innenumfangsnut des hohlen Pumpstößels eingesprengt und somit ebenfalls nur durch eine Schnappverbindung befestigt ist.

Eine besonders vorteilhafte Weiterbildung des Erfindungsgegenstandes besteht darin, daß der Basisteil der Pumpe als Belüftungsventil für den Behälter ein Rückschlagventil aufweist, dessen beide in Schließlage mit ihren Ventilschließflächen aneinanderliegende, gegeneinander elastisch bewegbare Ventilteile einteilig mit dem Basisteil ausgebildet sind, wobei vorzugsweise der Mantel des Basisteiles eine zu seinem inneren Ende gerichtete Überlappung aufweist, deren Innenfläche eine der beiden Ventilschließflächen bildet, an welche sich ein am Innenumfang des Basisteiles vorgesehener, zu dessen äußeren Ende führender, nutförmiger Entlüftungskanal anschließen kann. Es ist aber auch denkbar, das Belüftungsventil lediglich dadurch zu bilden, daß, ähnlich wie bei den beschriebenen Rückschlagventilen, am Umfang des Basisteiles ein über dessen Wanddicke durchgehender Schlitz angebracht wird, durch welchen zwei Ventilteile gegeneinander abgegrenzt werden, wobei die einander zugekehrten Schlitzflächen die Ventilschließflächen bilden. In diesem Fall ist eine Überlappung nicht erforderlich. Dennoch haben beide Ausführungsformen den Vorteil, daß der komplette, drei Rückschlagventile aufweisende Spender aus nur drei gesonderten Einzelteilen, nämlich dem Pumpenbalg, dem Basisteil und dem Pumpstößel, bestehen kann.

Zweckmäßig weist der Pumpstößel einen Nocken zur verdrehgesicherten Führung in einer Nut des Basisteiles auf, wobei diese Nut in einfacher Weise durch den Entlüftungskanal selbst gebildet sein kann. Ist der Nocken bei der ausgefahrenen Endstellung des Pumpstößels frei liegend vorgesehen und der Pumpstößel in dieser Lage gegenüber dem Basisteil um die Pumpenachse drehbar, so kann der Pumpstößel durch Verdrehen derart verriegelt werden, daß er gegenüber dem Basisteil nicht versehentlich niedergedrückt werden kann.

Die Erfindung wird im folgenden mit weiteren Einzelheiten anhand des in den Zeichnungen dargestellten Ausführungsbeispieles näher erläutert. Es sind dargestellt in

Fig. 1    ein erfindungsgemäßer Fließgutspender im Axialschnitt und in Ausgangsstellung
Fig. 2    der Fließgutspender gemäß Figur 1 in seiner anderen Endstellung
Fig. 3    ein Schnitt nach der Linie III/III in Fig. 2 in vergrößerter Darstellung
Fig. 4    ein Ausschnitt der Fig. 2 in vergrößerter Darstellung
Fig. 5    der Fließgutspender in Ansicht.

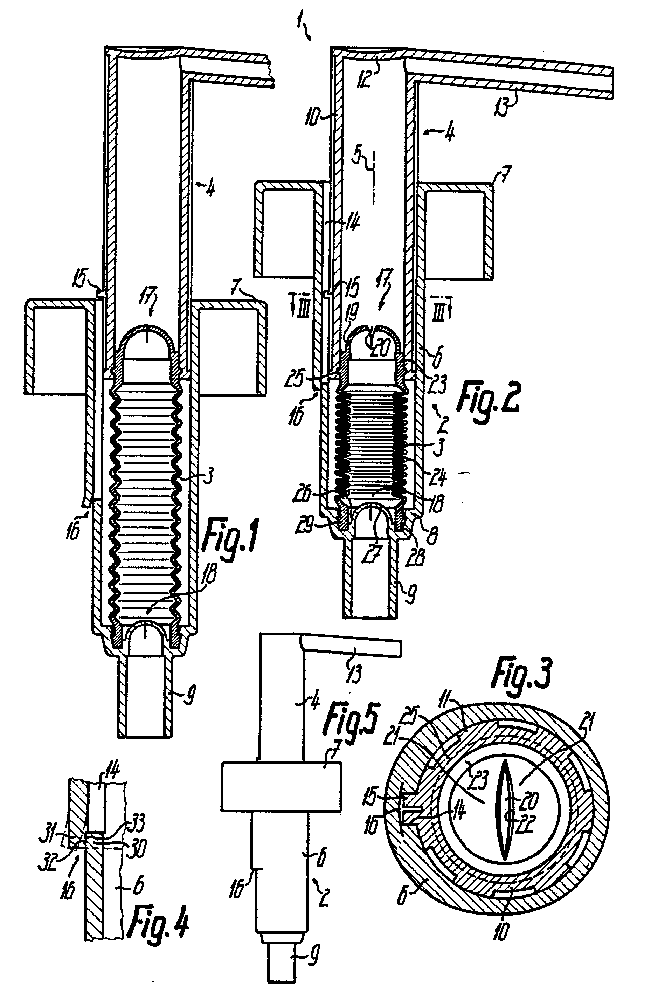

Wie die Fig. 1 bis 5 zeigen, weist ein erfindungsgemäßer Fließgutspender 1 nur drei gesonderte Einzelteile, nämlich zwei Pumpenteile 2, 3 und einen Pumpstößel 4 auf, wobei alle Teile im wesentlichen achsgleich zueinander liegen bzw. in Bezug auf die Pumpenachse 5 koaxial ineinander greifen. Der eine Pumpenteil ist als gehäuseartiger Basisteil 2 vorgesehen, während der andere Pumpenteil durch einen Pumpenbalg mit federnden Eigenschaften gebildet ist, derart, daß der Pumpenbalg 3 in jeder Stellung zur gestreckten Rückstellage gemäß Fig. 1 vorgespannt ist.

Der Basisteil 2 bildet ein Zylindergehäuse 6, das am äußeren Ende in eine Ringkappe 7 zur Befestigung am Hals oder dergl. eines mit dem Fließgut gefüllten Gefäßes übergeht und das benachbart zum inneren, im Abstand zu der Ringkappe 7 liegenden Ende eine ringförmige Stirnwand 8 aufweist, von welcher das Zylindergehäuse 6 in einen in der Achse 5 liegenden, im Durchmesser reduzierten Saugstutzen 9 übergeht, auf welchen beispielsweise ein in die Nähe des Bodens des Gefäßes führender Saugschlauch gesteckt werden kann. An der zylindrischen Innenfläche des Zylindergehäuses 6 ist der im wesentlichen ebenfalls zylindrische Stößelschaft 10 des Pumpenstößels 4 teleskopartig gleitbar mit über seinen Umfang verteilten Axialrippen 11 geführt, deren Längsflächen in einer an den Innendurchmesser des Zylindergehäuses angepassten zylindrischen Hüllfläche liegen. Dadurch wird eine leichtgängige Führung des Pumpstößels 4 gewährleistet. Der am inneren, im Zylindergehäuse 6 liegenden Ende offene, annähernd durchgehend rohrförmig hohle und am äußeren Ende mit einer stirnseitigen Endwand 12 verschlossene Stößelschaft 10 geht am äußeren Ende in einen nahezu radialen, rohrförmigen Austragschnabel 13 über, dessen gegenüber den Innenquerschnitten des Stößelschaftes 10 wesentlich kleinerer Schnabelkanal unmittelbar an den Hohlraum des Stößelschaftes 10 angeschlossen ist. Die Endwand 12 ist an der Außenseite konkav vertieft und dadurch als Daumendruckfläche ausgestaltet. In der äußeren Endstellung greift der Stößelschaft 10 nur etwa mit einem Viertel seiner Länge in den Basisteil 2 ein.

Die Wandung des Zylindergehäuses 6 des Basisteiles 2 weist an der Innenseite eine axiale, im Querschnitt annähernd rechteckige Nut auf, die gleichzeitig als Belüftungskanal 14 vorgesehen ist. Diese Nut, die im Bereich einer verdickten Zone der Wandung des Zylindergehäuses 6 liegt dient zur Aufnahme eines an sie angepassten Nockens 15 am Außenumfang des Stößelschaftes 10, wobei dieser Nocken 15 in der Mitte einer Axialrippe 11 vorgesehen sein kann. Bei ausgefahrener Stellung des Pumpstößels 4 liegt der Nocken 15 gemäß Fig. 1 an der äußeren Stirnseite der Ringkappe 7, so daß dann der Pumpstößel 4 gegenüber dem Basisteil 2 um die Achse 5 verdreht werden kann. In dieser Stellung ist der Pumpstößel 4 dann gegen Einfahren in den Basisteil 2 gesperrt, so daß die Pumpe unbeabsichtigt nicht betätigt werden kann. Die Anordnung kann dabei so getroffen werden, daß der Pumpenbalg nach Art einer Dreh- bzw. Torsionsfeder in der Stellung um die Achse 5 geringfügig vorgespannt ist, in welcher der Nocken 15 in die Nut eingreift. Wird der Nocken 15 aus der Nut herausgefahren, so verdreht sich der Pumpstößel 4 unter Entspannung der Torsionsspannung des Pumpenbalges 3 gegenüber dem Basisteil 2 so weit, daß die Sperrung selbsttätig eintritt. Durch geringfügiges Zurückdrehen des Pumpenstößels 4 zum Zwecke des Einfahrens des Nockens 15 in die Nut wird die Torsionsspannung wieder herbeigeführt.

Etwa in der Mitte der Länge des Zylindergehäuses 6 ist ein Belüftungsventil 16 im Mantel des Zylindergehäuses 6 vorgesehen. Dieses einstückig mit dem Zylindergehäuse 6 ausgebildete Belüftungsventil 16, das in Fig. 4 vergrößert dargestellt ist, weist zwei Ventilteile 30, 31 auf, die in geschlossenem Zustand mit ihren einander zugekehrten Ventilschließflächen 32, 33 aneinander anliegen. Ein Ventilteil 30 ist durch den an das innere Ende des Belüftungskanales 14 angrenzenden Mantelabschnitt des Zylindergehäuses 6 gebildet, welcher am Außenumfang durch den anderen Ventilteil 31 überlappt wird, der durch das innere Ende des den Belüftungskanal am Boden begrenzenden Wandungsabschnittes des Zylindergehäuses 6 gebildet ist. Die Ventilschließflächen 32, 33 können in Axialansicht gemäß Fig. 3 um die Pumpenachse 5 gekrümmt oder aber geradlinig ausgebildet sein. Wenn in dem mit dem Fließgut gefüllten, durch den Fließgutspender druckdicht verschlossenen Gefäß Unterdruck herrscht, so wird der Ventilteil 31 gemäß der in Fig. 4 strichpunktiert angedeuteten Stellung vom Ventilteil 30 weggedrückt, so daß die Ventilschließflächen 32, 33 voneinander abheben und Luft einströmen kann. Bei Überdrück im Gefäß wird der Ventilteil 31 druckdicht gegen den Ventilteil 30 gepresst.

Der als über seine ganze Lange von einer im wesentlichen zylindrischen Hüllfläche begrenzter, feingliedriger Faltenbalg ausgebildete Pumpenbalg 3 weist am äußeren Ende ein Rückschlagventil 17 und am inneren Ende ein Rückschlagventil 18 auf, wobei beide Rückschlagventile gegen dieselbe Fließrichtung, nämlich gegen die nach innen gerichtete Fließrichtung schließen. Beide Rückschlagventile 17, 18 haben dasselbe Funktionsprinzip und sind im wesentlichen gleich ausgestaltet, jedoch von unterschiedlicher Größe.

Das auslaßseitige Rückschlagventil 17, das in Fig. 2 geöffnet und in Fig. 1 geschlossen dargestellt ist, ist durch eine etwa halbkugelkalottenförmige Trennwand 19 am stirnseitigen Ende des Pumpenbalges 3 gebildet und mit einem in einer Axialebene der Pumpenachse 5 liegenden, die Trennwand durchsetzenden Schlitz 20 versehen, dessen einander gegenüberliegend seitlich in der Trennwand 19 vorgesehene Enden in gleicher Höhe und mit geringem Abstand von der Basis der Trennwand 19 liegen. Dadurch ist die Trennwand 19 in zwei annähernd viertelkugelförmige Ventilteile 21 unterteilt, deren einander zugekehrte Schlitzflächen die Ventilschließflächen des Rückschlagventiles 17 bilden. In unbelastetem Zustand liegen die Ventilschließflächen 22 unter Vorspannung schließend aneinander an. Die Trennwand 19 ist am Ende eines hülsenförmigen Endansatzes 23 des gefalteten Balgabschnittes 24 des Pumpenbalges 3 vorgesehen. Dieser an die Innenquerschnitte des Stößelschaftes angepasste Endansatz 23 greift mit radialer Vorspannung in den inneren Endabschnitt des Stößelschaftes 10 ein und weist in diesem Bereich einen über seinen Außenumfang vorstehenden, im Querschnitt annähernd halbkreisförmigen Ringwulst 25 auf, der in eine entsprechende Innenumfangsnut des Stößelschaftes 10 formschlüssig ein greift. Dadurch liegt das Rückschlagventil 17 vollständig innerhalb des Stößelschaftes 10, wobei der größte Durchmesser der Trennwand 19 geringfügig kleiner als der Innendurchmesser des Stößelschaftes 10 in diesem Bereich und das Ventil zur Schließlage vorgespannt ist.

Das einlaßseitige Rückschlagventil 18 weist in gleichartigem Aufbau wie das Rückschlagventil 17 eine teilkugelkalottenförmige Trennwand 26 auf, welche durch einen Schlitz in zwei Ventilteile 27 unterteilt ist. Dieses Rückschlagventil 18 liegt im wesentlichen in der im Querschnitt abgestuften Stirnwand 8 und ist einteilig mit dieser und dem Saugstutzen 9 ausgebildet. Der Außendurchmesser der Trennwand 26 ist geringfügig kleiner als der des Saugstutzens 9 bzw. annähernd gleich wie dessen Innendurchmesser. Die Trennwand 26 ist von einer in der Pumpenachse 5 liegenden, im Querschnitt widerhakenartig hinterschnittenen Ringnut 28 umgeben, welche an der inneren Stirnfläche der Stirnwand 8 vorgesehen ist. Am zugehörigen Ende des Balgabschnittes 24 weist der Pumpenbalg 3 in Fortsetzung des Balgabschnittes 24 einen in der Pumpenachse 5 liegenden, hülsenförmigen Schnappbefestigungsring 29 auf, der in seinen Querschnitten widerhakenartig an die Ringnut 28 derart angepasst ist, daß er mit radialer Vorspannung in die Ringnut 28 eingreift. Zur Montage braucht der Schnappbefestigungsring 29 lediglich unter Druck in die Ringnut 28 eingeführt werden, bis die widerhakenartig einander zugeordneten Ringschultern einander überspringen und dadurch die formschlüssige Verbindung hergestellt ist. Das einlaßseitige Rückschlagventil 18 liegt dadurch im wesentlichen vollständig innerhalb des Balges bzw. innerhalb des Schnappbefestigungsringes 29.

## Patentansprüche

1. Fließgutspender (1) mit Handbetätigung, insbesondere für flüssiges Fließgut, mit einer an der Einlaßseite und an der zu einer Austragöffnung führenden Auslaßseite je ein durch Differentialdruck selbstbetätigtes Rückschlagventil (17, 18) aufweisenden Balgpumpe, die als Pumpenteile (2, 3) einen an einem Behälter für das Fließgut anzuordnenden, einen Pumpenbalg im Bereich eines Endes halternden Basisteil (2) und den Pumpenbalg (3) aufweist, der mit einem von Hand gegenüber dem Basisteil (2) verschiebbaren, auf das andere Ende des Balges (3) wirkenden Pumpstößel (4) zusammendrückbar ist, wobei jedes Rückschlagventil (17, 18) zwei gegeneinander bewegbare, mit in Schließlage dicht aneinanderliegenden Ventilschließflächen versehene Ventilteile (21, 27) aufweist, von denen zwei einstückig mit einem Pumpenteil (2, 3) ausgebildet sind, dadurch gekennzeichnet, daß die beiden Ventile (17, 18) im Bereich der voneinander abgekehrten Enden des Pumpenbalges (3) liegen und beide Ventilteile (21 bzw. 27) wenigstens eines Ventiles (17 bzw. 18) einstückig mit dem zugehörigen Pumpenteil (3 bzw. 2) ausgebildet sind.

2. Spender nach Anspruch 1, dadurch gekennzeichnet, daß beide Ventilteile (21) des auslaßseitigen Ventiles (17) einstückig mit dem auslaßseitigen Ende des Pumpenbalges (3) und/oder beide Ventilteile (27) des einlaßseitigen Ventiles (18) einstückig mit dem Basisteil (2) ausgebildet sind.

3. Spender nach Anspruch 1 oder 2, dadurch gekennzeichnet daß die Ventilteile (21, 27) mindestens eines Rückschlagventiles (17, 18) durch eine elastisch verformbare Trennwand (19, 26) gebildet sind, die durch einen Schlitz (20) in die Ventilteile (21, 27) unterteilt ist, wobei die einander zugekehrten Schlitzflächen die Ventilschließflächen (22) bilden.

4. Spender nach Anspruch 3, dadurch gekennzeichnet, daß die Trennwand (19, 26) im Querschnitt zur Auslaßseite kappenartig, vorzugsweise kugelkalottenförmig, erhöht ist und insbesondere an der erhöhten Seite zur Bruckbeaufschlagung frei liegt.

5. Spender nach Anspruch 3 oder 4, dadurch gekennzeichnet, daß der Schlitz (20) in einer Symmetrieebene der Trennwand (19, 26), wie einer Axialebene der Pumpe, liegt und/oder nur über einen Teil der Höhe der kappenartigen Trennwand (19, 26) reicht.

6. Spender nach einem der Ansprüche 1 bis 5, dadurch gekennzeichnet, daß beide Rückschlagventile (17, 18) im wesentlichen gleich ausgebildet sind und vorzugsweise das auslaßseitige Rückschlagventil (17) größer als das andere ist.

7. Spender nach einem der Ansprüche 1 bis 6, dadurch gekennzeichnet, daß der Basisteil (2) der Pumpe ein den Pumpenbalg (3) umgebendes Zylindergehäuse (6) bildet, dessen innere Stirnwand (8) zu dem einlaßseitigen Rückschlagventil (18) geformt ist, welches insbesondere von einer hinterschnittenen Ringnut (28) für den dichten Eingriff eines Schnappbefestigungsringes (29) am zugehörigen Ende des Pumpenbalges (3) umgeben ist.

8. Spender nach einem der Ansprüche 1 bis 7, dadurch gekennzeichnet, daß am inneren Ende des Pumpstößels (4) das äußere Ende des Pumpenbalges (3) befestigt ist, das zu dem auslaßseitigen Rückschlagventil (17) geformt ist und vorzugsweise mit einem am Außenumfang vorgesehenen Ringwulst (25) abgedichtet in eine Innenumfangsnut des hohlen Pumpstößels (4) eingesprengt ist.

9. Spender nach einem der Ansprüche 1 bis 8, dadurch gekennzeichnet, daß der Basisteil (2) der Pumpe als Belüftungsventil für den Behälter ein Rückschlagventil (16) aufweist, dessen beide in Schließlage mit ihren Ventilschließflächen (32, 33) aneinanderliegende, gegeneinander elastisch bewegbare Ventilteile (30, 31) einteilig mit dem Basisteil (2) ausgebildet sind, wobei vorzugsweise der Mantel des Basisteiles (2) eine zu seinem inneren Ende gerichtete Überlappung aufweist, deren Innenfläche eine der beiden Ventilschließflächen (33) bildet, an welche sich ein am Innenumfang des Basisteiles (2) vorgesehener, zu dessen äußeren Ende führender, nutförmiger Belüftungskanal (14) anschließt.

10. Spender nach einem der Ansprüche 1 bis 9, dadurch gekennzeichnet, daß der Pumpstößel (4) einen Nocken (15) zur verdrehgesicherten Führung in einer Nut des Basisteiles (2), insbesondere in dem Belüftungskanal (14), aufweist und daß der Nocken (15) bei der ausgefahrenen Endstellung des Pumpstößels (4) frei liegt sowie der Pumpstößel (4) gegenüber dem Basisteil (2) um die Pumpenachse (5) drehbar ist.

## Claims

1. Flowing material dispenser (1) with manual operation, particularly for liquid flowing material, with on both the inlet side and the outlet side leading to a discharge opening a bellows pump having a check valve (17, 18) automatically operated by differential pressure and which has as pump components (2, 3) a base part (2) to be arranged on a container for the flowing material and retaining a pump bellows (3) in the vicinity of one end, as well as the pump bellows, which is compressable with a pump plunger (4) acting on the other end of the bellows (3) and displaceable manually with respect to the base part (2), each check valve (17, 18) having two valve components (21, 27) movable against one another with in the closed position valve closing faces which are tightly engaged and whereof two are constructed in one piece with a pump component (2, 3), characterized in that the two valves (17, 18) are located in the vicinity of the remote ends of the pump bellows (3) and both valve components (21, or 27) of at least one valve (17, or 18) are constructed in one piece with the associated pump component (3 or 2).

2. Dispenser according to claim 1, characterized in that both valve components (21) of the outlet-side valve (17) are constructed in one piece with the outlet-side end of the pump bellows (3) and/or both valve components (27) of the inlet-side valve (18) are constructed in one piece with base part (2).

3. Dispenser according to claims 1 or 2, characterized in that the valve components (21, 27) of at least one check valve (17, 18) are formed by an elastically deformable partition (19, 26), which is subdivided by a slot (20) into valve components (21, 27), the facing slot faces forming the valve closing faces (22).

4. Dispenser according to claim 3, characterized in that the partition (19, 26) is cross-sectionally raised towards the outlet side in cap-like and preferably spherical cap-like manner and is in particular exposed for pressurization on the raised side.

5. Dispenser according to claims 3 or 4, characterized in that the slot (20) is located in a plane of symmetry of partition (19, 26), such as an axial plane of the pump and/or only extends over part of the height of the cap-like partition (19, 26).

6. Dispenser according to one of the claims 1 to 5, characterized in that both check valves (17, 18) are substantially identically constructed and preferably the outlet-side check valve (17) is larger than the other.

7. Dispenser according to one of the claims 1 to 6, characterized in that the base part (2) of the pump forms a cylindrical casing (6) surrounding the pump bellows (3) and whose inner end wall (8) is shaped to the inlet-side check valve (18) and which is in particular surrounded by an undercut circular groove (28) for the tight engagement of a snap fastening ring (29) at the associated end of the pump bellows (3).

8. Dispenser according to one of the claims 1 to 7, characterized in that to the inner end of the pump plunger (4) is fixed the outer end of the pump bellows (3), which is shaped to the outlet-side check valve (17) and preferably sealed with a torus (25) provided on the outer circumference is sprung into an inner circumferential groove of the hollow pump plunger (4).

9. Dispenser according to one of the claims 1 to 8, characterized in that the base part (2) of the pump has a check valve (16) as the container vent valve and its two reciprocally elastically movable valve components (30, 31) engaging against one another with their valve closing faces (32, 33) in the closed position are constructed in one piece with the base part (2) and preferably the circumferential surface of base part (2) has an overlap directed towards its inner end and whose inner face forms one of the two valve closing faces (33), to which is connected a groove-like venting duct (14) provided on the inner circumference of base part (2) and leading to its outer end.

10. Dispenser according to one of the claims 1 to 9, characterized in that the pump plunger (4) has a cam (15) for the rotation-preventing guidance in a groove of the base part (2), particularly in the venting duct (14) and that in the extended end position of the pump plunger (4) the cam (15) is exposed and the plunger (4) can be rotated about pump axis (5) with respect to base part (2).

## Revendications

1. Dispensateur (1) de produits fluides, à actionnement manuel, en particulier pour des produits liquides, comportant une pompe à soufflet, qui est munie, du côté aspiration et du côté refoulement menant à un orifice de sortie, d'une soupape antiretour (17, 18) actionnée automatiquement par une pression différentielle, et qui comporte comme parties de pompe (2, 3) une partie de base (2) supportant à une extrémité un soufflet de pompe et à placer sur le réservoir de liquide, et le soufflet de pompe (3), qui peut être comprimé au moyen d'un poussoir (4) de pompe agissant sur l'autre extrémité du soufflet (3) et pouvant être déplacé à la main par rapport à la pièce de base, chaque soupape antiretour comportant deux parties de soupape (21, 27) présentant deux surfaces de fermeture de soupape pouvant être déplacées l'une par rapport à l'autre et qui, en position de fermeture, se joignent de façon étanche, et dont deux forment une seule pièce avec une partie de pompe (2, 3), caractérisé en ce que les deux soupapes (17, 18) se trouvent dans la zone des extrémités opposées du soufflet de pompe (3) et que les deux parties de soupape (21 ou 27) d'au moins une soupape (17 ou 18) sont construites en une seule pièce avec la partie de pompe correspondante (3 ou 2).

2. Dispensateur selon la revendication 1, caractérisé en ce que les deux parties de soupape (21) de la soupape (17) du côté refoulement sont construites en une seule pièce avec l'extrémité du soufflet de pompe (3) se trouvant du côté refoulement et/ou que les deux parties de soupape (27) de la soupape (18) du côté admission sont construites en une seule pièce avec la partie de base (2).

3. Dispensateur selon la revendication 1 ou 2, caractérisé en ce que les parties de soupape (21, 27) d'au moins une soupape antiretour (17, 18) sont constituées d'une membrane de séparation (19, 26) élastiquement déformable, subdivisée par une fente (20) en les parties de soupape (21, 27), les faces en regard l'une de l'autre de la fente formant les surfaces de fermeture (22) de la soupape.

4. Dispensateur selon la revendication 3, caractérisé en ce que la paroi de séparation (19, 26) s'élève, dans la section transversale vers le côté refoulement, en forme de chapeau, de préférence en forme de calotte sphérique, et est libre en particulier du côté surélevé pour la pressurisation.

5. Dispensateur selon la revendication 3 ou 4, caractérisé en ce que la fente (20) se trouve dans un plan de symétrie de la paroi de séparation (19, 26), tel qu'un plan axial de la pompe, et/ou ne s'étend que sur une partie de la hauteur de la paroi de séparation (19, 26) en forme de chapeau.

6. Distributeur selon l'une des revendications 1 à 5, caractérisé en ce que les deux soupapes antiretour (17, 18) sont en substance de construction identique, la soupape antiretour (17) du côté refoulement étant de préférence plus grande que l'autre.

7. Dispensateur selon l'une des revendications 1 à 6, caractérisé en ce que la partie de base (2) de la pompe forme un boîtier cylindrique (6) entourant le soufflet (3) de pompe, et dont la paroi frontale intérieure (8) est formée de manière à constituer la soupape antiretour (18) du côté admission, laquelle soupape est en particulier entourée d'une gorge circulaire (28) formée en dépouille pour l'engagement étanche d'une bague (29) de fixation encliquetée à l'extrémité correspondante du soufflet de pompe (3).

8. Dispensateur selon l'une des revendications 1 à 7 caractérisé en ce que, à l'extrémité intérieure du poussoir (4) de pompe est fixée l'extrémité extérieure du soufflet (3) de pompe, qui est formée en soupape antiretour (17) pour le côté refoulement et de préférence rendue étanche par un bourrelet annulaire (25) prévu au contour extérieur, et est forcée dans une rainure périphérique intérieure du poussoir (4) de pompe creux.

9. Dispensateur selon l'une des revendications 1 à 8, caractérisé en ce que la partie de base (2) de la pompe présente comme soupape d'aération pour le réservoir une soupape antiretour (16) dont les deux parties (30, 31), mobiles élastiquement l'une par rapport à l'autre et qui, en position fermée, se trouvent avec leurs surfaces de fermeture (32, 33) l'une contre l'autre, sont formées en une seule pièce avec la partie de base (2), tandis que, de préférence, l'enveloppe de la partie de base (2) présente un recouvrement dirigé vers son extrémité intérieure et dont la surface intérieure constitue l'une des deux surfaces de fermeture (33) de la soupape, à laquelle est contigu un canal d'aération (14) en forme de rainure prévu au contour intérieur de la partie de base (2) et menant à son extrémité extérieure.

10. Dispensateur selon l'une des revendications 1 à 9, caractérisé en ce que le poussoir (4) de pompe présente un ergot (15) assurant un guidage sans possibilité de rotation indésirable dans une rainure prévue dans la partie de base (2), en particulier dans le canal d'aération (14), et que l'ergot (15) est prévu libre en position finale sortie du poussoir (4) de pompe, ainsi que le poussoir (4) de pompe, peut tourner autour de l'axe (5) de la pompe par rapport à la partie de base (2).

Fig.1

Fig.2

Fig.3

Fig.4

Fig.5

1